# EUROPEAN PATENT APPLICATION

(11) **EP 3 629 679 A1**
(43) Date of publication of application: **01.04.2020**
(21) Application number: 18204224.2
(22) Date of filing: 03.11.2018
(51) Int. Cl.: H05H 1/28, H05H 1/34

(54) **REDUCED SCALE NOZZLES FOR PLASMA TORCH AND ADAPTER FOR THE NOZZLES**

(30) Priority: 30.09.2018 CZ 20180516
(71) Applicant: B&Bartoni, spol. s r. o., 29430 Dolni Cetno, Doubravicka (CZ)
(72) Inventor: Chumchal, Roman, 29430 Velké V elisy (CZ)

(57) **Abstract**

A metal machining invention which relates to plasma torch nozzles. It describes reduced scale nozzles for current loads of up to 400 A to be used in a liquid-cooled dual-gas plasma torch. The plasma flow passes through aperture (101) in nozzle (100) in direction (V). Aperture (101) is divergent and expands in direction (V) of the plasma flow. Aperture (101) is of a conical shape at point (105), radius shape at point (106), and elliptic shape at point (108). Following its narrowest section (104), aperture (101) expands at angle (A°) in direction (V) of the plasma flow. Diameter (D4) at the end of aperture (101) is larger than diameter (D1) at its beginning. Nozzle (100) is equipped with mounting surface (110) for insertion into the adapter. Nozzle (100) contains seal (109), which prevents passage of a liquid and gas through the connection between nozzle (100) and the adapter, which also provides attachment to the plasma torch.

## Description

### Field of the Invention

In general, the invention relates to nozzles for a plasma torch, arrangement of such nozzles, their shape and size. Furthermore, the invention relates to an adapter for connecting said nozzles to the plasma torch.

### Background of the Invention

A plasma torch is used for plasma arc cutting of metallic materials, such as steel. In general, an arc plasma torch consists of the torch body, cooling pipe, electrode, swirl ring, nozzle, nozzle holder, guard, and nozzle shield cap.

The cut material is divided by a plasma flow produced by the plasma torch. This flow consists of an ionized gas or gases at a high temperature. The high-temperature ionized gas flows through the nozzle aperture under pressure. In this way, the ionized gas flow is narrowed into a concentrated plasma flow, which then forms a plasma arc.

The plasma arc formed in this way may reach the temperature of up to 30,000 °C and energy density of up to 2x10⁶ W/cm². The higher the energy density and temperature of the plasma arc, the thicker the metallic materials that can be cut and the greater the cutting speed.

In the last 30 years, liquid-cooled plasma torches have seen many design changes. One of them is the plasma torch design using two separate gases. Plasma gas and shielding gas. Older liquid-cooled plasma torches used only the plasma gas. Due to the more complicated design of liquid-cooled dual-gas plasma torches, their measurements have grown larger both in length and in diameter.

Because of the high operating temperature of plasma torches, cooling is necessary. A plasma torch through which a liquid coolant flows during its operation in order to cool is a liquid-cooled plasma torch. Plasma torch components, such as nozzles, which come into direct contact with the flow of the liquid coolant are called directly cooled plasma torch components.

As the dimensions of liquid-cooled dual-gas plasma torches have grown, the dimensions of nozzles used in such torches have grown as well. This fact has increased material demands of nozzle manufacturing. In the known state of the art, nozzles for liquid-cooled dual-gas plasma torches with direct liquid cooling have been manufactured with the outside diameter ranging from 16.0 mm to 36.5 mm for loads from 15 A to 130 A, and ranging from 18.5 mm to 36.5 mm for loads over 130 A. In the state of the art as we know it, nozzles for liquid-cooled dual-gas plasma torches with indirect liquid cooling and loads of 15 A to 260 A have been manufactured with the largest outside diameter ranging from 26.0 mm to 34.0 mm.

For economic reasons, we have examined the smallest possible body size of the plasma nozzle with direct and indirect cooling for current loads ranging from 15 A to 400 A. Our goal was to reduce the manufacturing costs of production and improvement of functional properties and lifespan of a nozzle with direct and indirect cooling for liquid-cooled dual-gas plasma torches. The nozzle design can affect parameters of the concentrated plasma flow to a significant extent. The nozzle affects parameters of the plasma flow, such as the diameter of the plasma flow, its velocity, temperature, and energy density of the plasma flow.

The nozzle is subject to extreme heat at the point where the plasma flow passes through the aperture. Overheating increases the wear on the nozzle. This can be prevented by cooling of the nozzle by a gas or liquid as close as possible to the point of the nozzle where the heat is greatest. When the nozzle overheats, the material from which it is made partly melts, and the aperture directing the ionized gas flow into a concentrated plasma flow grows asymmetrically larger. A nozzle with an asymmetrically enlarged aperture fails to sufficiently concentrate the plasma flow and the asymmetry of the nozzle aperture skews the plasma flow in one direction. Such a worn-out nozzle must be replaced with a new one.

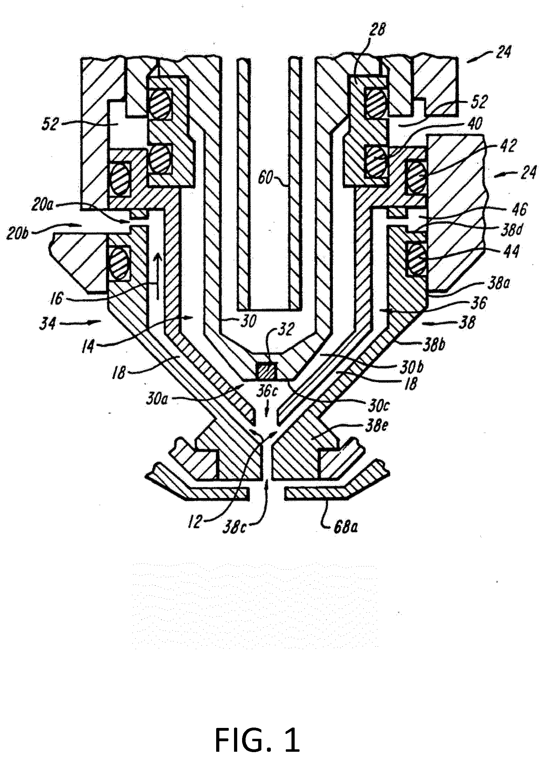

Stability of the plasma arc is important for the lifespan of a nozzle, so that the plasma flow passes smoothly through the nozzle aperture. A stable plasma arc is important to make a high-quality cut. An unstable plasma arc will result in a poor-quality surface of the cut material, plus it will affect dimensions of the product you cut. The plasma arc stability is the subject of the nozzle design according to US-5,317,126. A nozzle designed in this way allows you to stabilize the plasma arc by letting out some of the plasma gas, thus adjusting the plasma gas pressure in the space where the plasma arc is formed. This nozzle design is shown in **FIG. 1****.** It shows nozzle 38, consisting of two parts. The nozzle body and the inside pressed insert. In nozzle 38, there is aperture 38c, through which the plasma arc passes. At point 38b, nozzle 38 is cooled by a flow of liquid along its circumference. Nozzle 38 is designed so that space 18 and 36 is formed between the nozzle body and the pressed insert for the gas to go in direction 16 from the space where the plasma arc 36c is formed to side aperture 20a. Some of the plasma gas is let out through side aperture 20a, stabilizing the plasma gas pressure in the place where plasma arc 36c is formed.

To improve the nozzle lifespan, it is important that it is cooled by either a gas or a liquid. FIG. 2 shows the nozzle according to EP 2140739. This design of nozzle 4 deals with the optimum direction of the liquid coolant flow, so that nozzle 4 is cooled evenly all along its outside circumference. The sufficient cooling surface and an even flow of the liquid coolant improve the lifespan of nozzle 4.

The nozzle lifespan is also affected by properties of the material of which the nozzle is made. **FIG. 3** shows nozzle 14 according to EP 1531652. For this nozzle variant, the lifespan of nozzle 14 is improved by use of insert 26 at the location of aperture 22, through which plasma arc 16 passes. Insert 26 is made of a heat-proof material. This design significantly improves the lifespan of nozzle 14.

### Summary of the Invention

While looking for an optimum, as compact as possible, nozzle design, we have found that the cardinal factors affecting its lifespan include the material used to manufacture the part of the nozzle in the area through which the plasma arc passes, cooling of a sufficient surface of the nozzle in the optimum distance from the part of the nozzle through which the plasma arc passes, the shape of the aperture through which the plasma arc passes, the nozzle design allowing for plasma arc stabilization, and dimensions of the plasma torch. These aspects have the greatest impact on the required dimensions and shape of the nozzle.

While studying the design of existing liquid-cooled dual-gas plasma torches, we have established that the diameter of the plasma torch at the point where the nozzle is attached cannot be reduced while fully maintaining the existing functionality of the plasma torch without reducing its lifespan. In this way, we have ruled out the possibility of reducing the nozzle scale by reducing the plasma torch diameter at the point where the nozzle is attached.

If the entire nozzle, or a part of it, is made of a material with its melting point over 3000 °C, such as tungsten, as specified in EP 1531652, high resistance of the nozzle against harm at the point through which the plasma flow passes can be achieved, along with an improved lifespan. However, the manufacturing cost of such a nozzle would be so high that this solution is not economically viable. Copper alloys, such as Cu-ETP CW004A, proved to be the most suitable material, as it has high heat and electric conductivity, is more machinable than tungsten, and is available at a significantly lower price.

In terms of functionality, the nozzle consists of two parts. The fist part of the nozzle, which is in direct contact with the plasma arc, and the second part of the nozzle, which has the dimensions and shape necessary for connecting to the plasma torch. The plasma arc passes through the first part of the nozzle and it is this part that is exposed to the most heat. High demands are put on properties of the material of which the first part of the nozzle is made, on sufficient cooling, and on the distance between the cooled surface and the point through which the plasma arc passes. Hereinafter, this nozzle part shall be referred to as the reduced scale nozzle. This reference also reflects the significantly smaller dimensions of nozzles according to the invention when compared against dimensions of nozzles known from the state of the art. Dimensions and shape of the second part of the nozzle must be adapted to fit the plasma torch. Hereinafter, this nozzle part shall be referred to as the adapter.

We have focused on finding the solution to dividing the nozzle into the two separate functional components described above, so that the designed nozzle had lower manufacturing costs, improved functional properties, and longer lifespan.

For nozzles with direct liquid cooling, where a part of the nozzle surface is in direct contact with the liquid coolant, it has been established that the necessary minimum outside diameter of the reduced scale nozzle for loads ranging from 15 A to 130 A is 12.3 mm, while for a reduced scale nozzle for loads over 130 A the necessary minimum outside diameter is 13.5 mm. For nozzles with indirect liquid cooling, where the nozzle surface is not in contact with the liquid coolant, we have established that the necessary minimum outside diameter of the reduced scale nozzle for loads of up to 400 A is 18 mm.

These dimensions are based on the outside diameter of the plasma electrode, the space necessary for passage of the plasma gas between the electrode and the nozzle, and the thickness of the nozzle wall. The diameter of the electrode is determined by its maximum load, any decrease in which would be seen as undesirable. The space between the outside diameter of the electrode and the inside diameter of the nozzle is determined, among other things, by the distance between both surfaces necessary to prevent short circuit. For functional reasons, the size of the space for passage of the plasma gas between the electrode and the nozzle cannot be further reduced. Only the thickness of the nozzle wall can be reduced.

In order to reduce the outside diameter of the nozzle, we have focused on improvement of its cooling. We have improved the nozzle cooling through a design modification of the nozzle holder. In later tests, we have established that if the distance between the cooled surface of the nozzle and the nozzle aperture through which the plasma flow passes is less than 10 mm and more than 2.5mm, the reduced scale nozzle for loads ranging between 15 A and 130 A with its outside diameter over 13.0 mm has a sufficient cooling surface and a sufficient cross-section for the heat from the point where the reduced scale nozzle is most exposed to heat to dissipate towards the cooled surface of the reduced scale nozzle, so that it withstands loads ranging from 15 A to 130 A. The reduced scale nozzle for loads over 130 A with the distance between the cooled surface and the aperture through which the plasma flow passes 2.5 to 10 mm and the outside diameter over 16 mm, has a sufficient cooling surface and sufficient cross-section for the heat from the point where the reduced scale nozzle is most exposed to heat to dissipate towards the cooled surface of the reduced scale nozzle, so that it withstands loads over 130 A.

For nozzles not directly cooled by a liquid coolant, the cross-section of the nozzle body and the size of the contact area are important for its sufficient cooling. With a sufficient cross-section of the nozzle body, the material of which the nozzle is made is capable, because of its heat conductivity, of dissipating the necessary amount of heat energy from the point where the nozzle is exposed to heat to the contact area. Through the contact area, the nozzle passes its heat energy to the cooler material, adjoining the contact area of the nozzle. During our testing, we have established that to ensure a sufficient heat transfer from the nozzle to the cooler material through the contact area, you need the ratio between the size of the contact area and the nozzle load to be greater than 0.8 mm² per ampere of the load. With this ratio and the outside diameter of the nozzle over 19.7 mm, the nozzle has a sufficient cross-section for the heat to dissipate from the point where the nozzle is exposed to heat to the contact area and a sufficient surface of the contact area to withstand loads up to 400 A.

Furthermore, we have established in our testing, that when the nozzle is used for a prolonged period of time, the quality of the cut deteriorates as the nozzle aperture becomes choked. The aperture becomes choked because of deposition of miniscule particles of the material burnt out of the plasma electrode. In general, for plasma cutting, it is a proven practice to replace the nozzle along with the plasma electrode. A worn-out or choked nozzle aperture adversely affects the concentration and direction of the plasma flow, thus impairing the quality and perpendicularity of the cut through the product. When used, the plasma electrode is worn out at the place of its contact with the plasma arc. While the electrode is used, the wear on the electrode can reach up to 3 mm, depending on its type. Some of the material burnt out of the electrode is deposited in the nozzle aperture, impairing the quality and perpendicularity of the cut through the product. As its material is gradually burnt out of the electrode at the point of its contact with the plasma arc, the length of the plasma arc grows. After 2 mm are burnt out of the electrode, the plasma arc length grows by 2 mm, which has an adverse effect on plasma arc parameters, reducing the energy of the plasma flow and impairing the quality of the cut and the perpendicularity of the cut through the product. The material burnt out of the electrode and deposited in the nozzle aperture reduces the capability of the nozzle to properly concentrate the ionized gas into the plasma flow, thus impairing the quality and perpendicularity of the cut through the product.

We have established that by enlarging the nozzle aperture, we can reduce the heat to which the nozzle is exposed, as well as the amount of the material burnt out of the electrode deposited on the walls of the nozzle aperture. However, as the size of the nozzle aperture grows, the concentration of the plasma flow deteriorates, reducing the speed and thickness of the cut. In order to meet the required cutting properties, it is necessary to achieve the load of at least 70 A per mm² of the cross-section of the nozzle aperture through which the plasma flow passes.

The reduced scale nozzle with improved cooling and a proper distance between the cooled surface and the aperture through which the plasma flow passes, as we have designed it, can withstand the concentration/loads of up to 90 A per mm² of the cross-section of the aperture through which the plasma flow passes.

Furthermore, we have established that we can improve the lifespan of the reduced scale nozzle, if we use galvanic plating to lay a layer of nickel and/or chromium 0.008 to 0.012 mm thick all over its length.

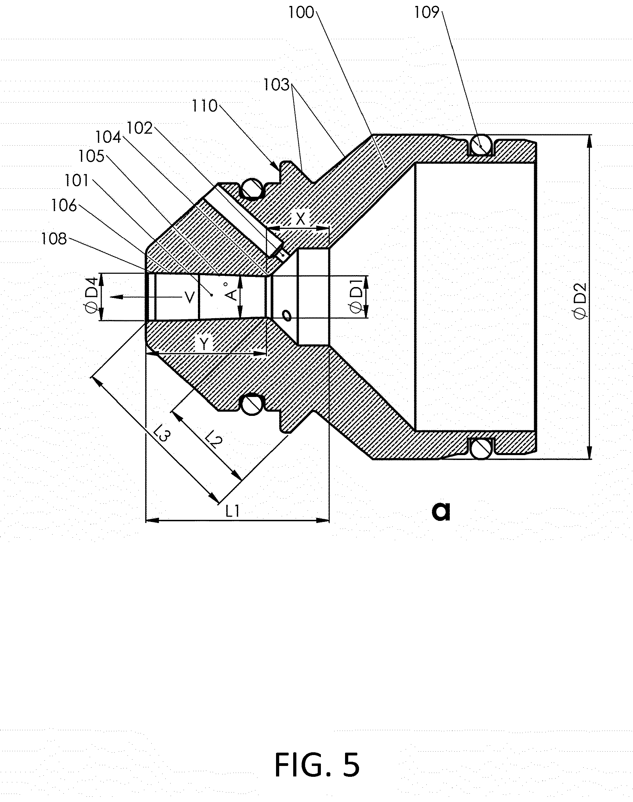

Furthermore, we have established that we can improve properties of the reduced scale nozzle when we modify the shape of the aperture through which the plasma flow passes. Details of this solution are given e.g. in **FIG. 5****.** It shows the nozzle for a liquid-cooled dual-gas plasma torch. The aperture through which the plasma flow passes is divergent. The divergent nozzle aperture widens after its narrowest point in direction V of the plasma flow. This design is based on the de Laval nozzle (or convergent-divergent nozzle). Area X is the convergent part of the nozzle, while area Y is the divergent part of the nozzle. In the convergent part of the nozzle, the energy of the electric arc is used to ionize the compressed gas, which dissociates because of the energy of the electric arc. The ionized gas is condensed/concentrated when it passes through the narrowest point of the nozzle. In area Y, the plasma flow is already concentrated, with its volume expanding because of the dissociation process. By enlarging the divergent aperture, we created suitable conditions for expansion of the plasma flow, reducing the friction between the plasma flow and nozzle walls in the divergent aperture. By that, we reduced the deposition of the material burnt out of the electrode on the walls of the divergent aperture and reduced the waste heat of the plasma arc. This means less heat on the plasma nozzle in the divergent aperture.

Later, we carried out some practical testing in order to establish the preferable angle A° at which the aperture expands conically after its narrowest point in direction V of the plasma flow. We have come to the conclusion that angle A° should preferably range from 0.5 to 3°, depending on the length of the conical expansion and on the plasma gas pressure. Between 0.5 and 3°, less material burnt out of the electrode is deposited on the surface of the divergent aperture and the energy of the plasma arc grows because of reduced heat loss when compared to the nozzle with a cylindrical aperture.

For the nozzle for the current load of 260 A, shown in **FIG. 5****,** we have achieved best results with angle A° equal to 2°. This nozzle made of copper alloy Cu-OF CW008A / EN 13601 and fitted with a divergent aperture has shown on average 42% longer lifespan while maintaining at least the same quality of cut when compared to the same nozzle with a cylindrical aperture. We have further prolonged the nozzle lifespan, using galvanic plating to lay a layer of nickel or chromium 0.008 to 0.012 mm thick all along its surface.

There are two groups of reduced scale nozzles according to the submitted invention, based on current load. The first group includes nozzles for loads ranging from 15 to 130 A. The second group includes nozzles for current loads over 130 A. The reason for this classification lies in different thermal loads on the surface of apertures 101 and 121. For apertures 101 and 121 and loads up to 130 A, the ratio between their diameter and volume ranges from 3:1 to 6:1. For apertures 101 and 121 and loads over 130 A, the ratio between their diameter and volume ranges from 1.8:1 to 3:1. This requires a different design of divergent nozzles for current loads from 15 to 130 A and a different design for current loads over 130 A.

The plasma flow concentration at the cross-section (plasma beam projection) and the current load are important to achieve the required cutting properties of the condensed plasma flow. When testing different variants of reduced scale nozzles, it was established that when passing through aperture 101 or 121, the preferable concentration ranges from 80 to 85 A per mm² of the smallest cross-section of aperture 101 or 121. At this concentration, more than 95 % of the gas contained in the plasma flow is ionized at distance L1, and the thermal load on walls of apertures 101 and 121 does not exceed structural limits of the material.

In addition to the above-mentioned current load perspective, nozzles can be also classified based on employed cooling method, as directly cooled nozzles and indirectly cooled nozzles. In terms of design of the aperture letting out the plasma flow, nozzles can be classified as nozzles with divergent aperture and nozzles with cylindrical aperture.

Nozzles in each of the above-mentioned groups can be further fitted with several, preferably two or three, side apertures to let some of the plasma gas out.

Nozzles in each of the above-mentioned groups can be galvanically plated with a layer of nickel or chromium 0.008 to 0.012 mm thick.

The inner space of a nozzle consists of two areas. Area X and area Y. Area X covers the convergent part of the nozzle, while area Y covers the divergent part of the nozzle. In the convergent part of the nozzle, the energy of the electric arc is used to ionize the compressed gas, dissociating it. Here, the plasma flow being formed is up to 7.1 mm distant from the surface of the reduced scale nozzle. The heat on the reduced scale nozzle is low in area X. In area Y, the plasma flow is being concentrated and remains of the compressed gas, which dissociates, are ionized. In this area, the compressed plasma flow is in contact with the surface of the reduced scale nozzle. The heat on the reduced scale nozzle is very high in area Y.

Areas X and Y have the combined length L1. Value L1 expresses the distance necessary to sufficiently dissociate the plasma gas before it leaves the reduced scale nozzle.

For reduced scale nozzles cooled directly by a liquid coolant and fitted with a divergent aperture, experiments established the preferred length L1 equal to 4.5 to 5.0 times the value of diameter D1.

For reduced scale nozzles cooled by a liquid coolant indirectly and fitted with a divergent aperture, experiments established the preferred length L1 equal to 5.2 to 5.7 times the value of diameter D1.

For reduced scale nozzles cooled directly by a liquid coolant and fitted with a cylindrical aperture, experiments established the preferred length L1 equal to 4.75 to 5.25 times the value of diameter D1.

For reduced scale nozzles cooled by a liquid coolant indirectly and fitted with a cylindrical aperture, experiments established the preferred length L1 equal to 5.7 to 6.2 times the value of diameter D1.

For reduced scale nozzles cooled directly by a liquid coolant and fitted with a divergent aperture, area Y is longer than area X. These nozzle types benefit from the fact that the plasma gas is dissociated mainly in area Y, that is in the divergent area. This leads to a greater concentration of the plasma flow and a greater plasma velocity at the output. Experiments established that for reduced scale nozzles cooled directly by a liquid coolant and fitted with a divergent aperture, the preferable length of area Y is equal to 2.8 to 3.2 times the value of diameter D1 and 60 to 70 % of the value of length L1.

For reduced scale nozzles cooled by a liquid coolant indirectly and fitted with a divergent aperture, area Y is shorter than area X. For these nozzle types, it is preferable when the plasma gas dissociation occurs mainly in area X. In this way, we can achieve the necessary dissociation of the plasma gas, while not overheating the reduced scale nozzle. Experiments established that for reduced scale nozzles cooled by a liquid coolant indirectly and fitted with a divergent aperture, the preferable length of area Y is equal to 2.3 to 2.8 times the value of diameter D1 and 40 to 50 % of the value of length L1.

For reduced scale nozzles cooled directly by a liquid coolant and fitted with a cylindrical aperture, the length of area Y is the same as the length of area X. For these nozzle types, it is possible and preferable for the plasma gas dissociation to occur evenly in both areas X and Y. This leads to a greater concentration of the plasma flow and a greater plasma velocity at the output. Experiments established that for reduced scale nozzles cooled directly by a liquid coolant and fitted with a divergent aperture, the preferable length of area Y is equal to 2.25 to 2.75 times the value of diameter D1 and 45 to 55 % of the value of length L1.

For reduced scale nozzles cooled by a liquid coolant indirectly and fitted with a cylindrical aperture, area Y is shorter than area X. For these nozzle types, it is preferable when the plasma gas dissociation occurs mainly in area X. In this way, we can achieve the necessary dissociation of the plasma gas, while not overheating the reduced scale nozzle. Experiments established that for reduced scale nozzles cooled by a liquid coolant indirectly and fitted with a cylindrical aperture, the preferable length of area Y is equal to 1.6 to 2.2 times the value of diameter D1 and 30 to 40 % of the value of length L1.

To connect the reduced scale nozzle to a liquid-cooled dual-gas plasma torch, we have developed a suitable adapter. This adapter is made in such a way, that the reduced scale nozzle fits in its front end. The connection between the reduced scale nozzle and the adapter is sealed with a flexible seal to prevent passage of a gas or liquid. The connection between the reduced scale nozzle and the adapter is freely dismountable. After inserting the reduced scale nozzle into the adapter, the reduced scale nozzle is secured in the adapter using a flexible seal, located at the point where the reduced scale nozzle fits the adapter. Thanks to this, the reduced scale nozzle will not fall out of the adapter of its own weight even when placed in the vertical position. The reduced scale nozzle is secured in the plasma torch with the nozzle holder, which adjoins it at the mounting surface. Without this mounting surface, the reduced scale nozzle cannot be attached to the plasma torch. The adapter shape is designed for insertion into the torch body and fitted with an additional seal at the point where the adapter is attached to the torch. The adapter does not come into contact with the plasma arc. Thanks to this fact, the adapter can be made of a material with a lower heat stability, such as brass.

We have managed to reduce the cost of the nozzle in general thanks to the fact that the reduced scale of the nozzle according to this invention itself reduces its material demands when compared to an equivalent plasma nozzle of larger dimensions according to the state of the art. And also because the adapter we have developed can be reused, because its design prevents wear.

### Brief Description of the Drawings

Additional details of the invention are provided in the drawings, where:
FIG. 1 shows a nozzle according to the state of the art known from US-5,317,126,

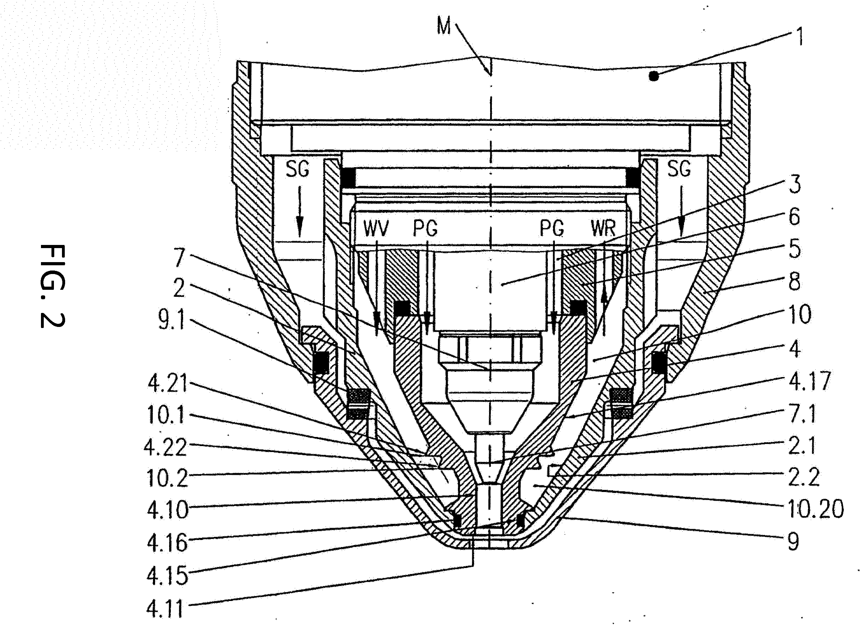

FIG. 2 shows a nozzle according to the state of the art known from EP 2104739,

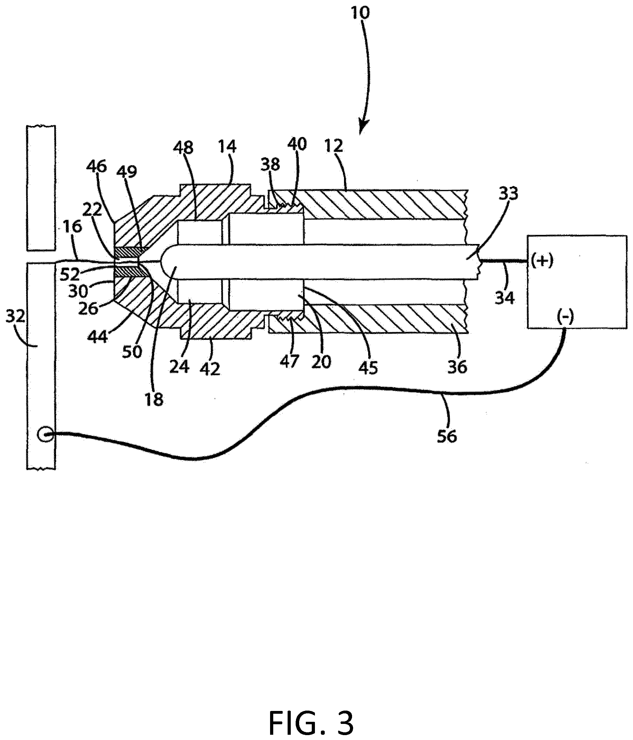

FIG. 3 shows a nozzle according to the state of the art known from EP 1531652,

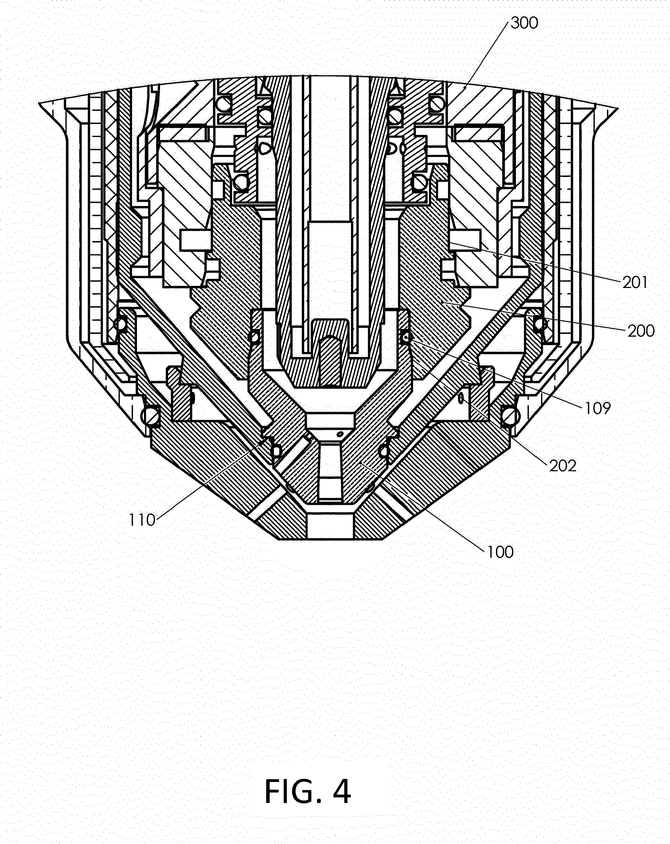

FIG. 4 shows a section of a liquid-cooled dual-gas torch with a reduced scale nozzle, illustrating the fitting of the adapter and the reduced scale nozzle into the plasma torch,
FIG. 5 shows a section of the reduced scale nozzle for the load of 260 A designed for use in a liquid-cooled dual-gas plasma torch, where the nozzle is cooled directly by a liquid coolant and is fitted with a divergent aperture,
FIG. 6 shows a section of the reduced scale nozzle for the load of 260 A designed for use in a liquid-cooled dual-gas plasma torch, where the nozzle is cooled by a liquid coolant indirectly and is fitted with a divergent aperture,
FIG. 7c shows a section of an alternative design of the reduced scale nozzle for the load of 260 A designed for use in a liquid-cooled dual-gas plasma torch, where the nozzle is cooled directly by a liquid coolant and is fitted with a divergent aperture,
FIG. 7d shows a section of an alternative design of the reduced scale nozzle for the load of 130 A designed for use in a liquid-cooled dual-gas plasma torch, where the nozzle is cooled directly by a liquid coolant and is fitted with a divergent aperture,
FIG. 7e shows a section of the reduced scale nozzle for the load of 30 A designed for use in a liquid-cooled dual-gas plasma torch, where the nozzle is cooled directly by a liquid coolant and is fitted with a cylindrical aperture,
FIG. 7f shows a section of an alternative design of the reduced scale nozzle for the load of 30 A designed for use in a liquid-cooled dual-gas plasma torch, where the nozzle is cooled directly by a liquid coolant and is fitted with a cylindrical aperture,
FIG. 8g shows a section of the reduced scale nozzle for the load of 30 A designed for use in a liquid-cooled dual-gas plasma torch, where the nozzle is cooled by a liquid coolant indirectly and is fitted with a cylindrical aperture,
FIG. 8h shows a section of an alternative design of the reduced scale nozzle for the load of 130 A designed for use in a liquid-cooled dual-gas plasma torch, where the nozzle is cooled by a liquid coolant indirectly and is fitted with a cylindrical aperture,
FIG. 9a shows a section of the adapter designed for fitting the reduced scale nozzle into a plasma torch,
FIG. 9b shows a section of an alternative adapter designed for fitting the reduced scale nozzle into a plasma torch,
FIG. 9c shows a section of an alternative adapter designed for fitting the reduced scale nozzle into a plasma torch,
FIG. 9d shows a section of an alternative adapter designed for fitting the reduced scale nozzle into a plasma torch,
FIG. 9e shows a section of an alternative adapter designed for fitting the reduced scale nozzle into a plasma torch,
FIG. 9f shows a section of an alternative adapter designed for fitting the reduced scale nozzle into a plasma torch,
FIG. 10 shows a combination of the reduced scale nozzle according to FIG. 5 and its adapter as compared to a nozzle according to the known state of the art,
FIG. 11 shows a combination of the reduced scale nozzle according to FIG. 6 and its adapter as compared to a nozzle according to the known state of the art,
FIG. 12 shows a combination of the reduced scale nozzle according to FIG. 7c and its adapter as compared to a nozzle according to the known state of the art,
FIG. 13 shows a combination of the reduced scale nozzle according to FIG. 7d and its adapter as compared to a nozzle according to the known state of the art,
FIG. 14 shows a combination of the reduced scale nozzle according to FIG. 7d and an alternative adapter as compared to a nozzle according to the known state of the art,
FIG. 15 shows a combination of the reduced scale nozzle according to FIG. 7e and its adapter as compared to a nozzle according to the known state of the art,
FIG. 16 shows a combination of the reduced scale nozzle according to FIG. 7f and its adapter as compared to a nozzle according to the known state of the art,
FIG. 17 shows a combination of the reduced scale nozzle according to FIG. 8g and its adapter as compared to a nozzle according to the known state of the art, and
FIG. 18 shows a combination of the reduced scale nozzle according to FIG. 8h and its adapter as compared to a nozzle according to the known state of the art.

### Description of the Preferred Embodiments

### Embodiment 1

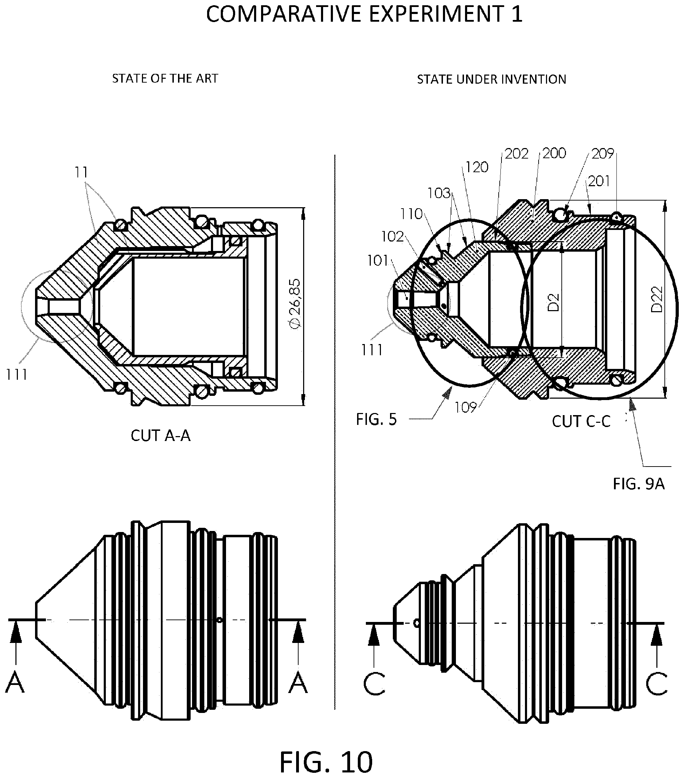

Reduced scale nozzle 100 according to FIG. 5 and 10 for the load of 260 A designed for use in a liquid-cooled dual-gas plasma torch. In this torch, the nozzle is cooled by a liquid coolant directly. The liquid cools the electrode and the torch body.

In nozzle 100, there is aperture 101, through which the plasma flow passes in direction V. Aperture 101 is divergent and expands in direction V of the plasma flow. Aperture 101 is of a conical shape at point 105, radius shape at point 106, and elliptic shape at point 108. Following its narrowest section 104, aperture 101 expands at angle A° equal to 2° in direction V of the plasma flow.

In area X, the energy of the electric arc is used to ionize the compressed gas, dissociating it. The ionized gas is condensed/concentrated when it passes through the narrowest point 104. In area Y, the plasma flow is already concentrated, with its volume expanding because of the dissociation process. Diameter D4 at the end of aperture 101 is larger than diameter D1 at its beginning. Because aperture 101 expands in direction V, the friction of the plasma flow on the walls is reduced at points 105, 106, and 108. Furthermore, the plasma arc heat loss has been reduced at points 105, 106, and 108, as well as the heat exposure of nozzle 100 at the same places.

Area X is 3 mm long, while area Y is 6 mm long. At its beginning, aperture 101 has diameter D1 of 2.0 mm. The ratio between the length of area Y and diameter D1 is 3:1. Length L1 equals 4.5 times diameter D1.

Nozzle 100 is equipped with mounting surface 110 for insertion into adapter 200. Nozzle 100 contains seal 109, which prevents passage of a liquid and gas through the connection between nozzle 100 and adapter 200.

Nozzle 100 is cooled by a liquid coolant on its surface 103. Distance L2 between cooled surface 103 and the beginning of aperture 101 is 4.77 mm, while distance L3 between cooled surface 103 and the end of aperture 101 is 8.68 mm. Nozzle 100 also contains 3 apertures 102 to let out some of the plasma gas into the shielding gas.

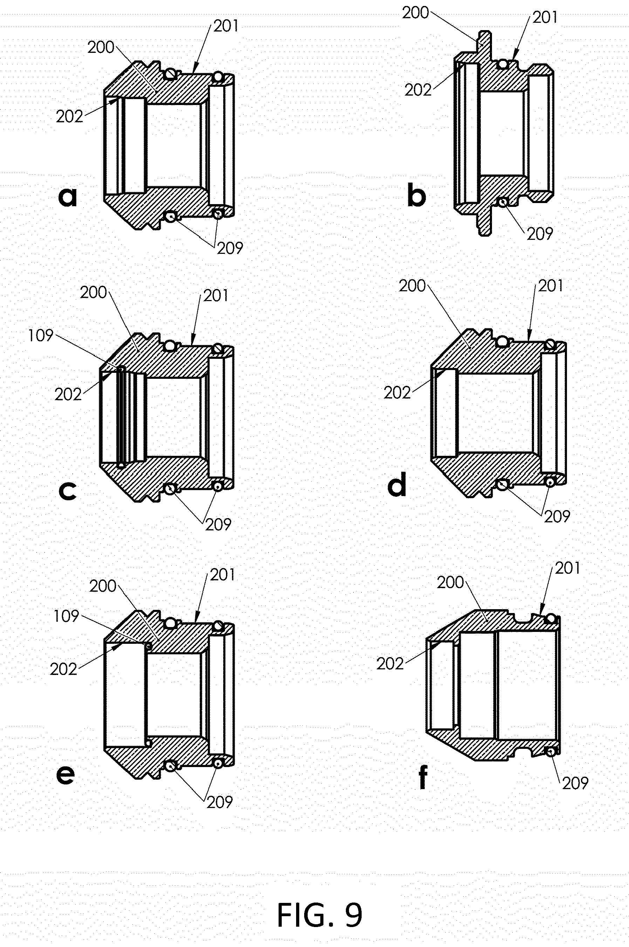

Nozzle 100 is connected to plasma torch 300 by adapter 200 according to FIG. 9a, which is made of CuZn40Pb2 / EN CW617N. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. The connection between nozzle 100 and adapter 200 is freely dismountable, wherein the seal 109 is placed between these parts to prevent passage of a liquid and gas through the connection between nozzle 100 and adapter 200. Seal 109 is a part of nozzle 100. Seal 109 can be placed at any contact area between nozzle 100 and adapter 200.

### Embodiment 2

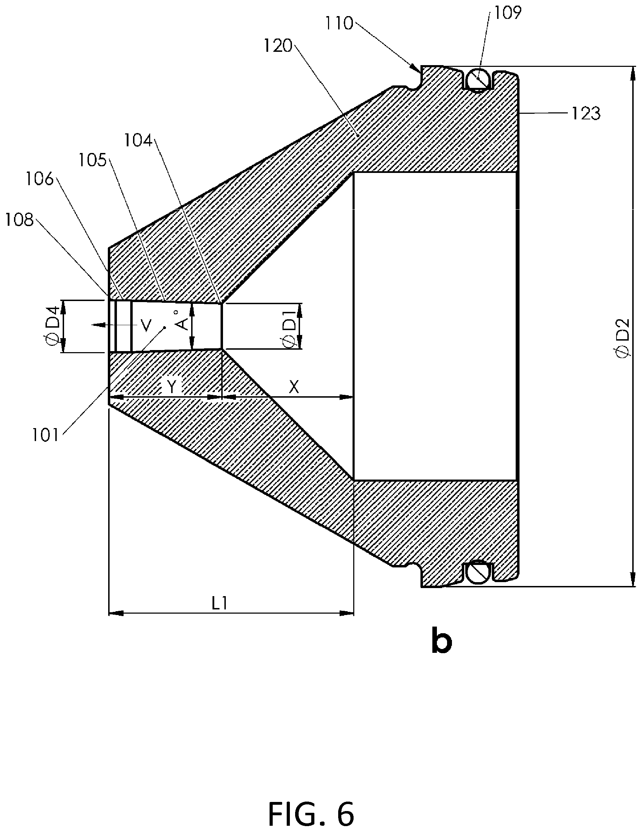

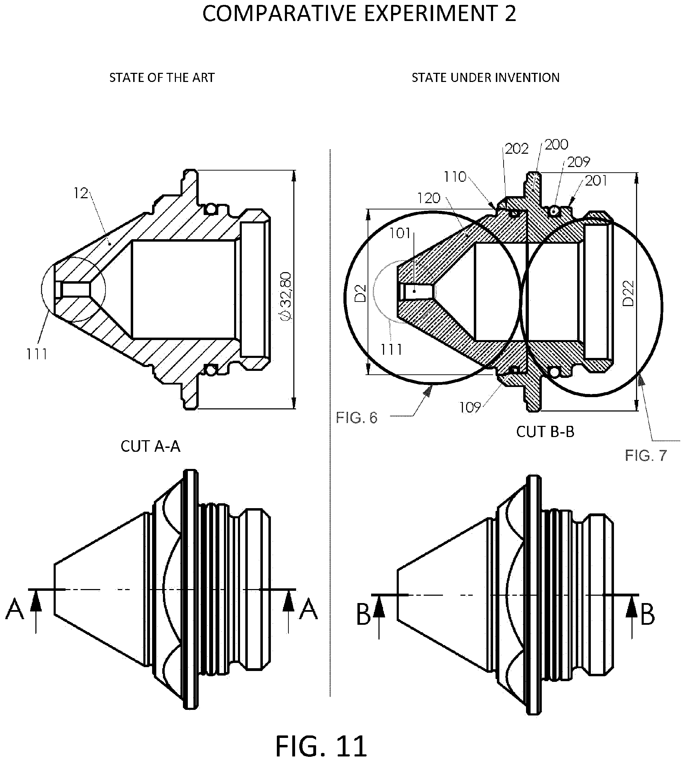

Reduced scale nozzle 120 according to FIG. 6 and 11 for the load of 260 A designed for use in a liquid-cooled dual-gas plasma torch. In this torch, the plasma nozzle is cooled by a liquid coolant indirectly. The liquid cools the electrode and the torch body.

In nozzle 120, there is aperture 101, through which the plasma flow passes in direction V. Aperture 101 is divergent and expands in direction V of the plasma flow. Aperture 101 is of a conical shape at point 105, radius shape at point 106, and elliptic shape at point 108. Following its narrowest section 104, aperture 101 expands at angle A° equal to 2° in direction V of the plasma flow.

In area X, the energy of the electric arc is used to ionize the compressed gas, dissociating it. The ionized gas is condensed/concentrated when it passes through the narrowest point 104. In area Y, the plasma flow is already concentrated, with its volume expanding because of the dissociation process. Diameter D4 at the end of aperture 101 is larger than diameter D1 at its beginning. Because aperture 101 expands in direction V, the friction of the plasma flow on the walls is reduced at points 105, 106, and 108. Furthermore, the plasma arc heat loss has been reduced at points 105, 106, and 108, as well as the heat exposure of nozzle 120 at the same places.

Area X is 6 mm long, while area Y is 5 mm long. At its beginning, aperture 101 has diameter D1 of 2.0 mm. The ratio between the length of area Y and diameter D1 is 2.5:1. Length L1 equals 5.5 times diameter D1.

Nozzle 120 is provided with mounting surface 110 for insertion into adapter 200 and with surface 123, where nozzle 120 touches adapter 200. Nozzle 120 is cooled by means of surface 123, with the cooler adapter 200 receiving the heat from the hotter nozzle 120. Experiments established that the minimum necessary area of surface 123 is 0.80 mm² per ampere. Nozzle 120 contains seal 109, which prevents passage of a liquid and gas through the connection between nozzle 100 and adapter 200.

Nozzle 120 is connected to plasma torch 300 by adapter 200 according to Figure 9b, which is made of CuZn40Pb2 / EN CW617N. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. The connection between nozzle 100 and adapter 200 is freely dismountable, wherein the seal 109 is placed between these parts to prevent passage of a liquid and gas. Seal 109 is a part of nozzle 100. Seal 109 can be placed at any contact area between nozzle 100 and adapter 200.

### Embodiment 3

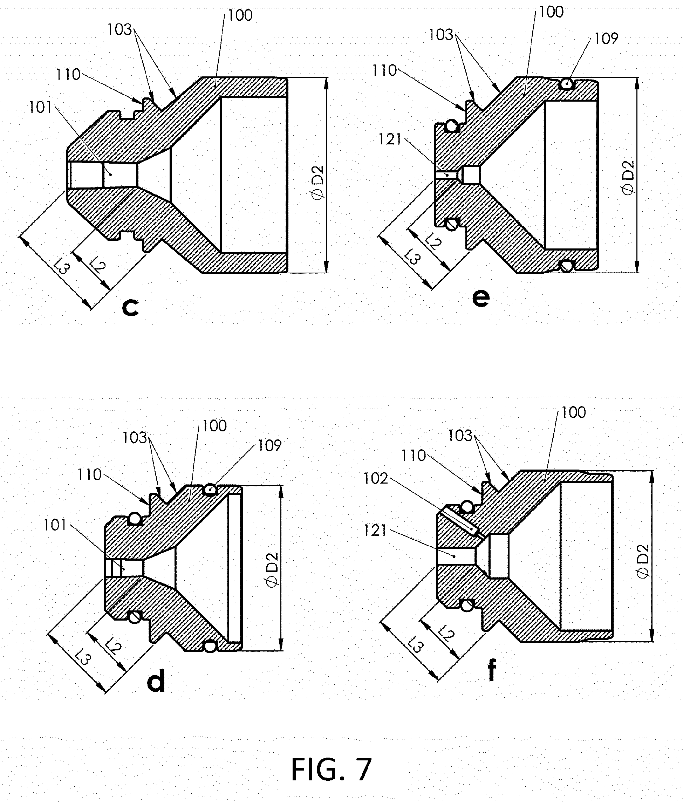

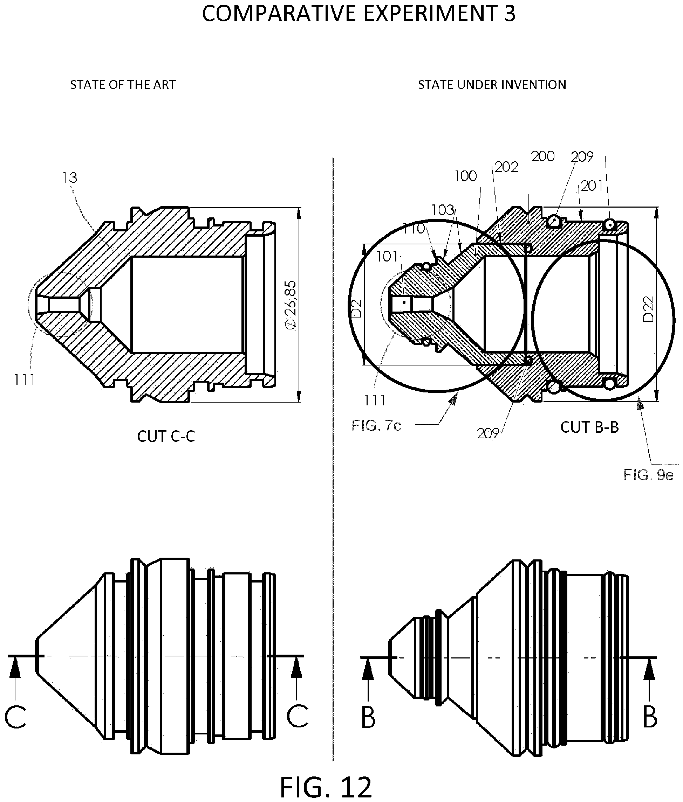

Reduced scale nozzle 100 according to FIG. 7c and 12 for the load of 260 A designed for use in a liquid-cooled dual-gas plasma torch. In this torch, the nozzle is cooled by a liquid coolant directly. The liquid cools the electrode and the torch body.

In nozzle 100, there is aperture 101, through which the plasma flow passes in direction V. Aperture 101 is divergent and expands in direction V of the plasma flow. Aperture 101 is of a conical shape at point 105, radius shape at point 106, and elliptic shape at point 108. Following its narrowest section 104, aperture 101 expands at angle A° equal to 2° in direction V of the plasma flow.

Area X is the convergent part of the nozzle, while area Y is the divergent part of the nozzle. In area X, the energy of the electric arc is used to ionize the compressed gas, dissociating it. The ionized gas is condensed/concentrated when it passes through the narrowest point 104. In area Y, the plasma flow is already concentrated, with its volume expanding because of the dissociation process. Diameter D4, at the end of aperture 101, is larger than diameter D1 at its beginning. Because aperture 101 expands in direction V, the friction of the plasma flow on the walls of nozzle 100 is reduced at points 105, 106, and 108. By this, we have achieved reduced deposition of the material burnt out of the electrode on the walls of nozzle 100 at points 105, 106, and 108. Furthermore, the plasma arc heat loss has been reduced at points 105, 106, and 108, as well as the heat exposure of nozzle 100 at the same places.

Area X is 3 mm long, while area Y is 6 mm long. At its beginning, aperture 101 has diameter D1 of 2.0 mm. The ratio between the length of area Y and diameter D1 is 3:1. Length L1 equals 4.5 times diameter D1.

Nozzle 100 is equipped with mounting surface 110 for insertion of adapter 200.

Nozzle 100 is cooled by a liquid coolant on its surface 103. Distance L2 between cooled surface 103 and the beginning of aperture 101 is 4.62 mm, while distance L3 between cooled surface 103 and the end of aperture 101 is 8.74 mm.

Nozzle 100 is connected to plasma torch 300 by adapter 200 according to FIG. 9e, which is made of CuZn40Pb2 / EN CW617N. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. The connection between nozzle 100 and adapter 200 is freely dismountable, wherein the seal 109 is placed between these parts to prevent passage of a liquid and gas through the connection between nozzle 100 and adapter 200. Seal 109 can be placed at any contact area between nozzle 100 and adapter 200.

### Embodiment 4

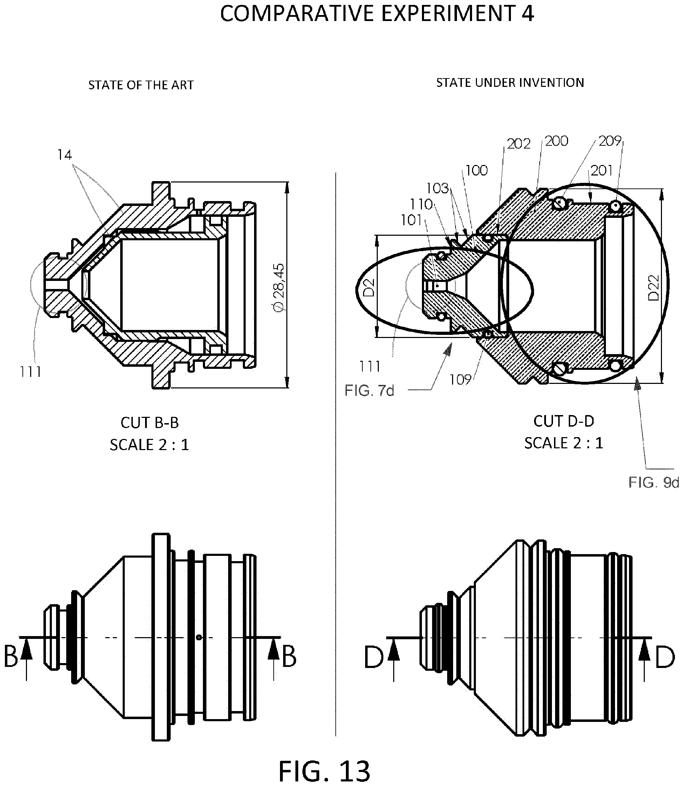

Reduced scale nozzle 100 according to FIG. 7d and 13 for the load of 130 A designed for use in a liquid-cooled dual-gas plasma torch. In this torch, the nozzle is cooled by a liquid coolant directly. The liquid cools the electrode and the torch body.

In nozzle 100, there is aperture 101, through which the plasma flow passes in direction V. Aperture 101 is divergent and expands in direction V of the plasma flow. Aperture 101 is of a conical shape at point 105, radius shape at point 106, and elliptic shape at point 108. Following its narrowest section 104, aperture 101 expands at angle A° equal to 2° in direction V of the plasma flow.

Area X is the convergent part of the nozzle, while area Y is the divergent part of the nozzle. In area X, the energy of the electric arc is used to ionize the compressed gas, dissociating it. The ionized gas is condensed/concentrated when it passes through the narrowest point 104. In area Y, the plasma flow is already concentrated, with its volume expanding because of the dissociation process. Diameter D4 at the end of aperture 101 is larger than diameter D1 at its beginning. Because aperture 101 expands in direction V, the friction of the plasma flow on the walls of nozzle 100 is reduced at points 105, 106, and 108. By this, we have achieved reduced deposition of the material burnt out of the electrode on the walls of nozzle 100 at points 105, 106, and 108. Furthermore, the plasma arc heat loss has been reduced at points 105, 106, and 108, as well as the heat exposure of nozzle 100 at the same places.

Area X is 2.1 mm long, while area Y is 4.2 mm long. At its beginning, aperture 101 has diameter D1 of 1.4 mm. The ratio between the length of area Y and diameter D1 is 3:1. Length L1 equals 4.5 times diameter D1.

Nozzle 100 is equipped with mounting surface 110 for insertion of adapter 200. Nozzle 100 contains seal 109, which prevents passage of a liquid and gas through the connection between nozzle 100 and adapter 200.

Nozzle 100 is cooled by a liquid coolant on its surface 103. Distance L2 between cooled surface 103 and the beginning of aperture 101 is 4.75 mm, while distance L3 between cooled surface 103 and the end of aperture 101 is 7.02 mm.

Nozzle 100 was sufficiently galvanically plated with a layer of chromium 0.008 to 0.012 mm thick.

Nozzle 100 is connected to plasma torch 300 by adapter 200, which is made of CuZn40Pb2 / EN CW617N. Adapter 200 employed in this embodiment is of type "d" according to FIG. 9d. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. The connection between nozzle 100 and adapter 200 is freely dismountable, with seal 109 placed between these parts to prevent passage of a liquid and gas through the connection between nozzle 100 and adapter 200. Seal 109 can be placed at any contact area between nozzle 100 and adapter 200.

### Embodiment 5

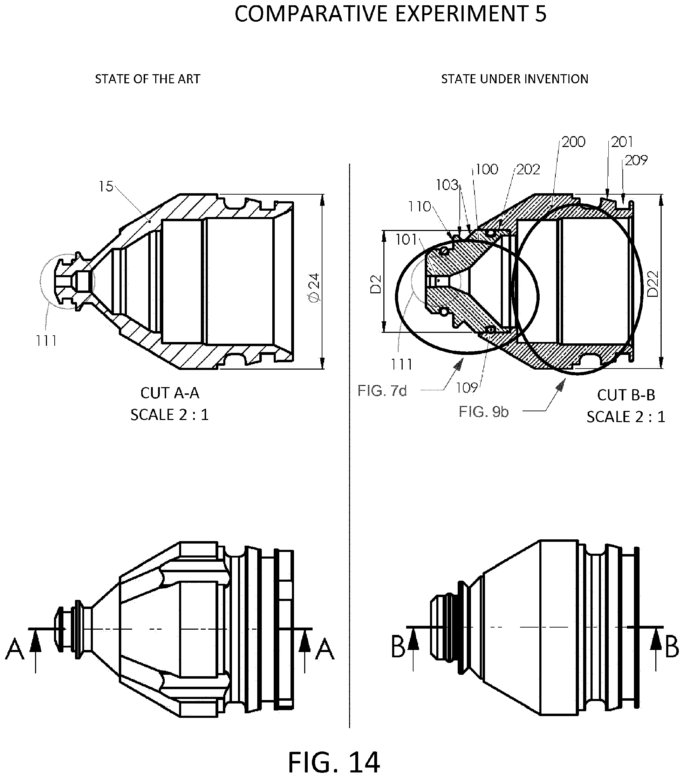

Reduced scale nozzle 100 according to FIG. 7d and 14, the same as the nozzle in embodiment 4, with one difference: instead of additional galvanic plating with a layer of chromium, it has been plated with a layer of nickel 0.008 to 0.012 mm thick.

Nozzle 100 is connected to plasma torch 300 by adapter 200, which is made of CuZn40Pb2 / EN CW617N. Adapter 200 employed in this embodiment is of type "f" according to FIG. 9f. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. The connection between nozzle 100 and adapter 200 is freely dismountable, with seal 109 placed between these parts to prevent passage of a liquid and gas through the connection between nozzle 100 and adapter 200. Seal 109 can be placed at any contact area between nozzle 100 and adapter 200.

### Embodiment 6

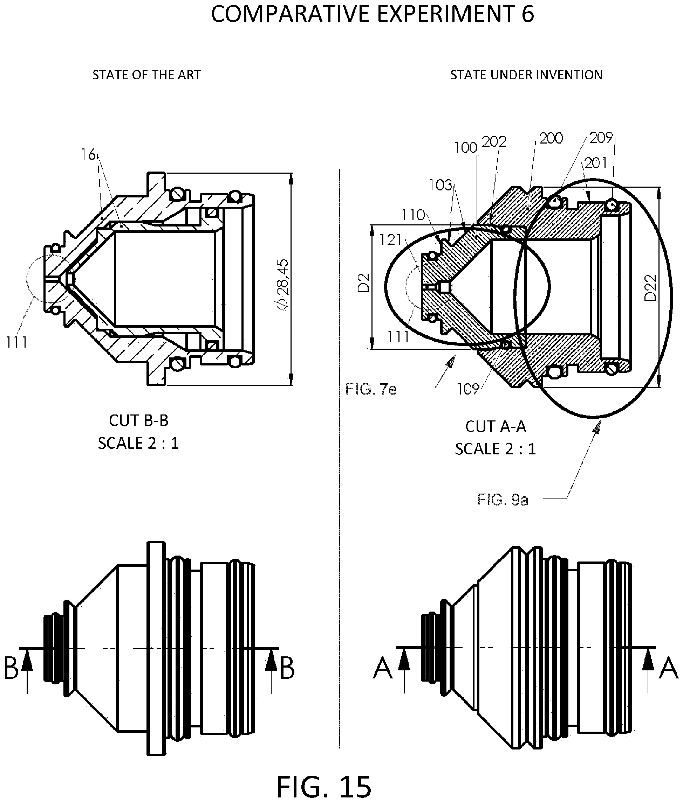

Reduced scale nozzle 100 according to FIG. 7e and 15 for the load of 30 A designed for use in a liquid-cooled dual-gas torch. In this torch, the plasma nozzle is cooled directly by a liquid coolant. The liquid cools the electrode and the torch body.

The plasma flow passes through aperture 121 in nozzle 100 in direction V. Aperture 121 has a cylindrical shape. In aperture 121, the energy of the electric arc is used to ionize the compressed gas, which dissociates because of the energy of the electric arc. The ionized gas is condensed / concentrated when entering aperture 121.

Area X is 1.6 mm long, while area Y is 1.6 mm long. At its beginning, aperture 121 has diameter D1 of 0.65 mm. The ratio between the length of area Y and diameter D1 is 2.46:1. Length L1 equals 4.92 times diameter D1.

Nozzle 100 is equipped with mounting surface 110 for insertion into adapter 200. Nozzle 100 contains seal 109, which prevents passage of a liquid and gas through the connection between nozzle 100 and adapter 200.

Nozzle 100 is cooled by a liquid coolant on its surface 103. Distance L2 between cooled surface 103 and the beginning of aperture 121 is 5.14 mm, while distance L3 between cooled surface 103 and the end of aperture 121 is 6.48 mm.

Nozzle 100 is connected to plasma torch 300 by adapter 200 according to FIG. 9a, which is made of CuZn40Pb2 / EN VW617N. On its side 202, adapter 200 is provided with a seat for insertion of nozzle 100, while on its side 201, it is provided with a shaping for insertion of the body of torch 300, and also it is provided with seal 209 at the point where adapter 200 is attached to torch 300. The connection between nozzle 100 and adapter 200 is freely dismountable, wherein the seal 109 placed between these parts to prevent passage of a liquid and gas through the connection. Seal 109 is a part of nozzle 100. The seal can be placed at any contact area between nozzle 100 and adapter 200.

### EMBODIMENT 7

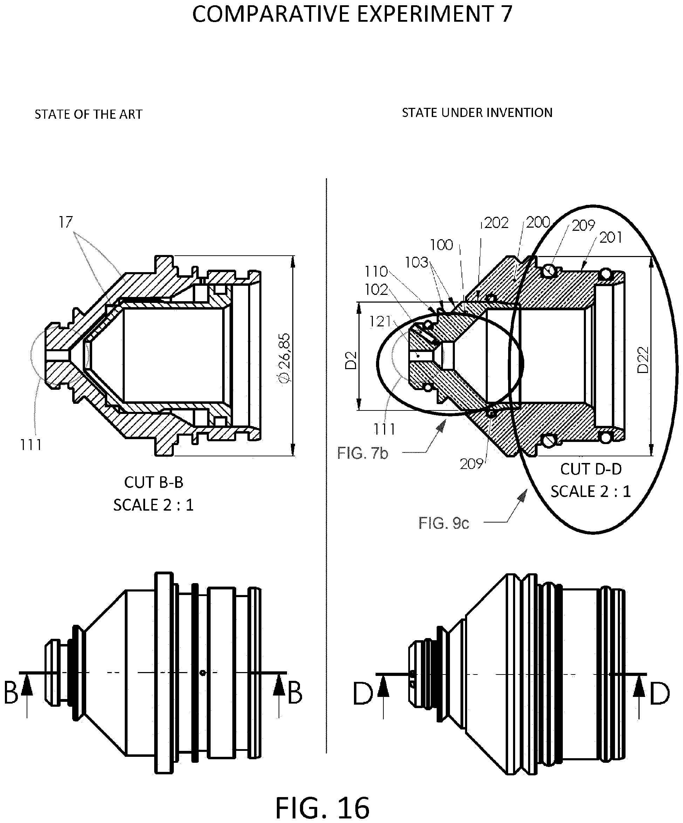

Reduced scale nozzle 100 according to FIG. 7f and 16 for the load of 130 A designed for use in a liquid-cooled dual-gas plasma torch. In this torch, the plasma nozzle is cooled directly by a liquid coolant. The liquid cools the electrode and the torch body.

The plasma flow passes through aperture 121 in nozzle 100 in direction V. Aperture 121 has a cylindrical shape. In the cylindrical part of nozzle 100, the energy of the electric arc is used to ionize the compressed gas, which dissociates because of the energy of the electric arc. The ionized gas is condensed / concentrated when entering aperture 121.

Area X is 3.6 mm long, while area Y is 3.6 mm long. The diameter of aperture 121 is 1.45 mm. The ratio between the length of area Y and the diameter of aperture 121 is 2.5:1. Length L1 equals 5 times the diameter of aperture 121.

Nozzle 100 is equipped with mounting surface 110 for insertion into adapter 200.

Nozzle 100 is on its surface 103 cooled by a liquid, wherein the distance L2 between cooled surface 103 and the beginning of aperture 121 being 4.73 mm, and distance L3 between cooled surface 103 and the end of aperture 121 being 7.05 mm. Nozzle 100 also contains 3 apertures 102 to let out some of the plasma gas into the shielding gas.

Nozzle 100 is connected to plasma torch 300 by adapter 200 according to FIG. 9c, which is made of CuZn40Pb2 / EN CW617 N. On its side 202, adapter 200 is provided with a seat for insertion of nozzle 100, while on its side 201, it is provided with a shaping for insertion into the body of torch 300, and also it is provided with seal 209 at the point where adapter 200 is attached to torch 300. Seal 109 is placed at the freely dismountable connection between nozzle 100 and adapter 200 to prevent passage of a liquid and gas. Seal 109 is a part of adapter 200. Seal 109 can be placed at any contact area between nozzle 100 and adapter 200.

### EMBODIMENT 8

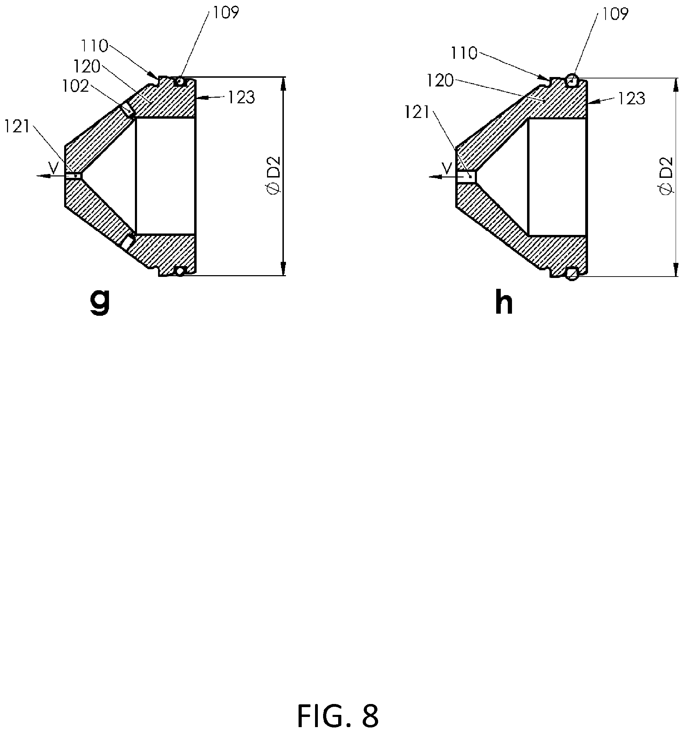

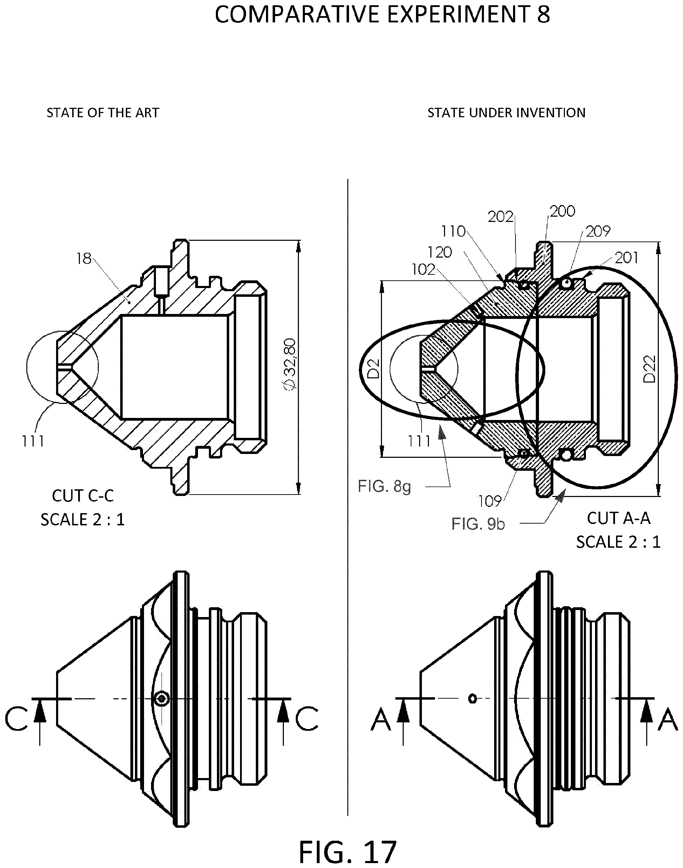

Reduced scale nozzle 120 according to FIG. 8g and 17 for the load of 30 A designed for use in a liquid-cooled dual-gas plasma torch. In this torch, the plasma nozzle is not cooled by a liquid coolant directly. The liquid cools the electrode and the torch body.

The plasma flow passes through aperture 121 in nozzle 120 in direction V. Aperture 121 has a cylindrical shape. In the cylindrical part of nozzle 120, the energy of the electric arc is used to ionize the compressed gas, which dissociates because of the energy of the electric arc. The ionized gas is condensed / concentrated when entering aperture 121.

Area X is 6.86 mm long, while area Y is 1.4 mm long. The diameter of aperture 121 is 0.7 mm. The ratio between the length of area Y and the diameter of aperture 121 is 2:1. Length L1 equals 11.8 times the diameter of aperture 121.

Nozzle 120 is provided with mounting surface 110 for insertion into adapter 200 and with surface 123, where nozzle 120 touches adapter 200. Nozzle 120 is cooled by means of surface 123, with the cooler adapter 200 receiving the heat from the hotter nozzle 120. Experiments established that the minimum necessary area of surface 123 is 7.45 mm² per ampere. Nozzle 120 contains seal 109, which prevents passage of a gas through the connection between nozzle 120 and adapter 200. Nozzle 120 also contains 2 apertures 102 to let out some of the plasma gas into the shielding gas.

Nozzle 120 is connected to plasma torch 300 by adapter 200 according to Figure 9b, which is made of CuZn40Pb2 / EN CW617N. On its side 202, adapter 200 is provided with a seat for insertion of nozzle 100, while on its side 201, it is provided with a shaping for insertion into the body of torch 300, and furthermore it is provided with seal 209 at the point where adapter 200 is attached to torch 300. Seal 109 is placed at the freely dismountable connection between nozzle 120 and adapter 200 to prevent passage of a liquid and gas. Seal 109 is a part of nozzle 120. Seal 109 can be placed at any contact area between nozzle 120 and adapter 200.

### EMBODIMENT 9

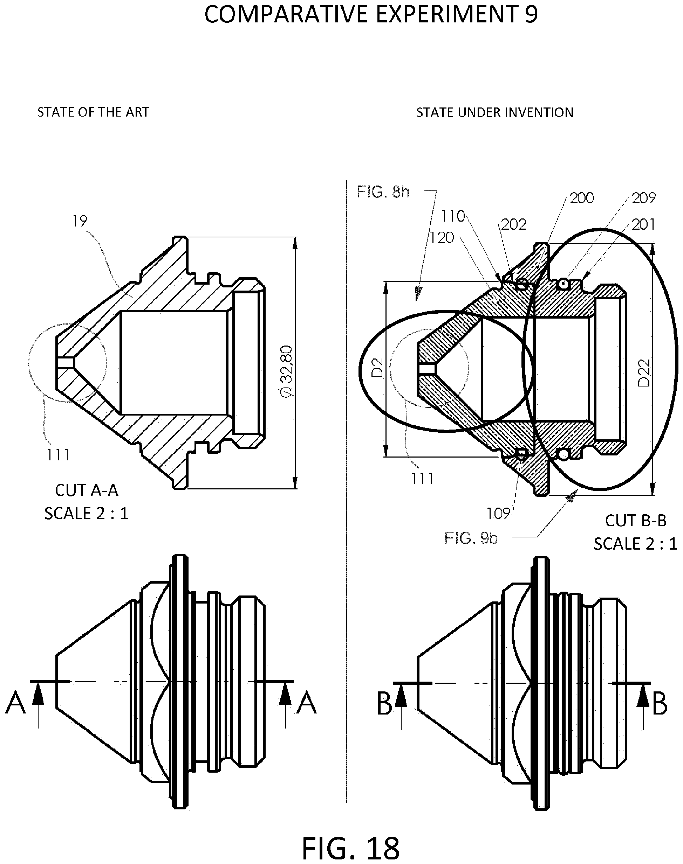

Reduced scale nozzle 120 according to FIG. 8h and 18 for the load of 130 A designed for use in a liquid-cooled dual-gas plasma torch. In this torch, the plasma nozzle is not cooled by a liquid coolant directly. The liquid cools the electrode and the torch body.

The plasma flow passes through aperture 121 in nozzle 120 in direction V. Aperture 121 has a cylindrical shape. In the cylindrical part of nozzle 120, the energy of the electric arc is used to ionize the compressed gas, which dissociates because of the energy of the electric arc. The ionized gas is condensed / concentrated when entering aperture 121.

Area X is 5.6 mm long, while area Y is 2.8 mm long. The diameter of aperture 121 is 1.4 mm. The ratio between the length of area Y and the diameter of aperture 121 is 2.0:1. Length L1 equals 6.0 times diameter D1.

Nozzle 120 is provided with mounting surface 110 for insertion into adapter 200 and with surface 123, where nozzle 120 touches adapter 200. Nozzle 120 is cooled by means of surface 123, with the cooler adapter 200 receiving the heat from the hotter nozzle 120. Experiments established that the minimum necessary area of surface 123 is 1.72 mm² per ampere. Nozzle 120 contains seal 109, which prevents passage of a liquid and gas through the connection between nozzle 120 and adapter 200.

Nozzle 120 is connected to plasma torch 300 by adapter 200 according to Figures 9b and 18, which is made of CuZn40Pb2 / EN CW617 N. On its side 202, adapter 200 is provided with a seat for insertion of nozzle 120, while on its side 201, it is provided with a shaping for insertion into the body of torch 300, and also it is provided with seal 209 at the point where adapter 200 is attached to torch 300. Seal 109 is placed at the freely dismountable connection between nozzle 120 and adapter 200 to prevent passage of a liquid and gas. Seal 109 is a part of nozzle 120. Seal 109 can be placed at any contact area between nozzle 120 and adapter 200.

In order to compare the effects achieved by reduced scale nozzles according to the submitted invention against commercially available nozzles (state of the art), a series of comparative experiments have been carried out, as listed below.

### Comparative Experiment 1

To test reduced scale nozzles 100 for the load of 260 A, we used type "a" reduced scale plasma nozzle 100 according to FIG. 5 and 10. Nozzle 100 had the outside diameter D2 of 15.70 mm, while commercially available nozzle 11 (HPR 400 XD®, by Hypertherm®), whose design matches US-5,317,126, had the outside diameter of 26.85 mm. Nozzle 100 was made of Cu-OF CW008 / EN 13601 and at the load of 260 A its average lifespan was 42% longer than that of commercial nozzle 11, made of CuTeP CW118C.

Adapter 200 employed in this experiment was of type "a" according to FIG. 9a. After nozzle 100 was worn out at point 111 of its most strained segment, it was necessary to replace the worn-out nozzle 100 with a brand new nozzle 100. There was no wear on adapter 200. Adapter 200 continued to perform its function even after 20 pcs of nozzles 100 were consumed. Nozzle 100 withstood the concentrated load of 82.8 A per mm² of the cross-section of aperture 101. Upon comparing the manufacturing cost of 20 pcs of nozzles 11 for the load of 260 A against the manufacturing cost of 20 pcs of reduced scale nozzles 100 of type "a" for the load of 260 A plus 1 pc of type "a" adapter 200, it was established that for the solution according to the submitted invention, the material consumption was reduced by 75.5 % and the manufacturing time was reduced by 5 %.

### Comparative Experiment 2

To test reduced scale nozzles 120 for the load of 260 A, we used type "b" reduced scale plasma nozzle 120 according to Figures 6 and 11. Nozzle 120 had the outside diameter D2 of 22.80 mm, while commercially available nozzle 12 (HPR 130-260®, by Ajan®) had the outside diameter of 32.80 mm. Nozzle 120 was made of Cu-OF CW008 / EN 13601 and at the load of 260 A its average lifespan was 36% longer than that of commercial nozzle 12, made of CuTeP CW118C.

Adapter 200 employed in this experiment was of type "b" according to FIG. 9b. After nozzle 120 was worn out at point 111 of its most strained segment, it was necessary to replace the worn-out nozzle 120 with a brand new nozzle 120. There was no wear on adapter 200. Adapter 200 continued to perform its function even after 20 pcs of nozzles 120 were consumed. Nozzle 120 withstood the concentrated load of 82.8 A per mm² of the cross-section of aperture 101. Upon comparing the manufacturing cost of 20 pcs of nozzles 12 for the load of 260 A against the manufacturing cost of 20 pcs of reduced scale nozzles 120 of type "b" for the load of 260 A plus 1 pc of type "b" adapter 200, it was established that for the solution according to the submitted invention, the material consumption was reduced by 67 % and the manufacturing time was reduced by 45 %.

### Comparative Experiment 3

To test reduced scale nozzles 100 for the load of 260 A, we used type "c" reduced scale plasma nozzle 100 according to FIG. 7c and 12. Nozzle 100 had the largest outside diameter D2 of 16.70 mm, while commercially available nozzle 13 (HPR 400 XD®, by HYPERTHERM®) had the outside diameter of 26.85 mm. Nozzle 100 was made of Cu-OF CW008A / EN 13601 and at the load of 260 A its average lifespan was 38% longer than that of commercial nozzle 13, made of CuTeP CW118C.

Adapter 200 employed in this experiment was of type "e" according to FIG. 9e. After nozzle 100 was worn out at point 111 of its most strained segment, it was necessary to replace the worn-out nozzle 100 with a brand new nozzle 100. There was no wear on adapter 200. Adapter 200 continued to perform its function even after 20 pcs of nozzles 100 were consumed. Nozzle 100 withstood the concentrated load of 82.8 A per mm² of the cross-section of aperture 101. Upon comparing the manufacturing cost of 20 pcs of nozzles 13 for the load of 260 A against the manufacturing cost of 20 pcs of reduced scale nozzles 100 of type "c" for the load of 260 A plus 1 pc of type "e" adapter 200, it was established that for the solution according to the submitted invention, the material consumption was reduced by 72.8 % and the manufacturing time was reduced by 20.5 %.

### Comparative Experiment 4

To test reduced scale nozzles 100 for the load of 130 A, we used type "d" reduced scale plasma nozzle 100 according to FIG. 7d and 13. Nozzle 100 had the largest outside diameter D2 of 14.10 mm, while commercially available nozzle 14 (HPR 130®, by Hypertherm®) had the outside diameter of 28.45 mm. Nozzle 100 was made of Cu-OF CW008A / EN 13601 and at the load of 130 A its average lifespan was 52% longer than that of commercial nozzle 14, made of CuTeP CW118C. After applying a chromium layer 0.008 to 0.012 mm thick using galvanic plating, the lifespan of nozzle 100 was extended by additional 62 %.

Adapter 200 employed in this experiment was of type "d" according to FIG. 9d and 13. After nozzle 100 was worn out at point 111 of its most strained segment, it was necessary to replace the worn-out nozzle 100 with a brand new nozzle 100. There was no wear on adapter 200. Adapter 200 continued to perform its function even after 20 pcs of nozzles 100 were consumed. Nozzle 100 withstood the concentrated load of 84.5 A per mm² of the cross-section of aperture 101. Upon comparing the manufacturing cost of 20 pcs of nozzles 14 for the load of 130 A against the manufacturing cost of 20 pcs of reduced scale nozzles 100 of type "d" for the load of 130 A plus 1 pc of type "d" adapter 200, it was established that for the solution according to the submitted invention, the material consumption was reduced by 85 % and the manufacturing time was reduced by 54 %.

### Comparative Experiment 5

To test reduced scale nozzles 100 for the load of 130 A, we used type "d" reduced scale plasma nozzle 100 according to FIG. 7d and 14. Nozzle 100 had the largest outside diameter D2 of 14.10 mm, while commercially available nozzle 15 (PerCut 450®, by Kjellberg®) had the outside diameter of 24.0 mm. Type "d" nozzle 100 was made of Cu-OF CW008A / EN 13601 and at the load of 130 A its average lifespan was 33% longer than that of commercial nozzle 15, made of CuTeP CW118C. After applying a nickel layer 0.008 to 0.012 mm thick using galvanic plating , the lifespan of nozzle 100 was extended by additional 52 %.

Adapter 200 employed in this experiment was of type "f" according to FIG. 9f and 14. After nozzle 100 was worn out at point 111 of its most strained segment, it was necessary to replace the worn-out nozzle 100 with a brand new nozzle 100. There was no wear on adapter 200. Adapter 200 continued to perform its function even after 20 pcs of nozzles 100 were consumed. Nozzle 100 withstood the concentrated load of 84.5 A per mm² of the cross-section of aperture 101. Upon comparing the manufacturing cost of 20 pcs of nozzles 15 for the load of 130 A against the manufacturing cost of 20 pcs of reduced scale nozzles 100 of type "d" for the load of 130 A plus 1 pc of type "f" adapter 200, it was established that for the solution according to the submitted invention, the material consumption was reduced by 75 % and the manufacturing time was reduced by 29 %.

### Comparative Experiment 6

To test reduced scale nozzles 100 for the load of 30 A, we used type "e" reduced scale nozzle 100 according to Figures 7e and 15. Nozzle 100 of this type had the outside diameter D2 of 15.7 mm, while commercially available nozzle 16 (HPR 130®, by Hypertherm®), whose design matches US-5,317,126, had the outside diameter of 28.45 mm. Nozzle 100 was made of Cu-OF CW008A / EN 13601 and at the load of 30.0 A its average lifespan was 12% longer than that of commercial nozzle 15, made of CuTeP CW118C.

Adapter 200 employed in this experiment was of type "a" according to FIG. 9a and 15. Adapter 200 was used to test reduced scale nozzles for the load of 30 A. After nozzle 100 was worn out at point 111 of its most strained segment, it was necessary to replace the worn-out nozzle 100 with a brand new nozzle 100. There was no wear on adapter 200. Adapter 200 continued to perform its function even after 20 pcs of nozzles 100 were consumed. Nozzle 100 withstood the concentrated load of 30 A per mm² of the cross-section of aperture 121. Upon comparing the manufacturing cost of 20 pcs of nozzles 15 for the load of 30 A against the manufacturing cost of 20 pcs of reduced scale nozzles 100 of type "e" for the load of 30 A plus 1 pc of type "a" adapter 200, it was established that for the solution according to the invention, the material consumption was reduced by 78 % and the manufacturing time was reduced by 51 %.

### Comparative Experiment 7

To test reduced scale nozzles 100 for the load of 130 A, we used type "f' reduced scale nozzle 100 according to FIG. 7f and 16. Nozzle 100 according to the invention had the outside diameter D2 of 14.60 mm, while commercially available nozzle 17 (HPR 400 XD®, by Hypertherm®) had the largest outside diameter of 26.85 mm. Nozzle 100 was made of Cu-OF CW008A / EN 13601 and at the load of 130 A its average lifespan was the same as that of commercially available nozzle 17, made of CuTeP CW118C.

Adapter 200 employed in this experiment was of type "c" according to Figure 9c. After nozzle 100 was worn out at point 111 of its most strained segment, it was necessary to replace the worn-out nozzle 100 with a brand new reduced scale nozzle 100. There was no wear on adapter 200. Adapter 200 continued to perform its function even after 20 pcs of nozzles 100 were consumed. Nozzle 100 withstood the concentrated load of 82,0 A per mm² of the cross-section of aperture 121. Upon comparing the manufacturing cost of 20 pcs of nozzles 17 for the load of 130 A against the manufacturing cost of 20 pcs of reduced scale nozzles 100 of type "f" for the load of 130 A plus 1 pc of type "c" adapter 200, it was established that for the solution according to the invention, the material consumption was reduced by 82.3 % and the manufacturing time was reduced by 42.2 %.

### Comparative Experiment 8

To test reduced scale nozzles 120 for the load of 30 A, we used type "g" reduced scale nozzle 120 according to FIG. 8g and 17. Nozzle 120 according to the invention had the largest outside diameter D2 of 22.8 mm, while commercially available nozzle 18 (HP 130-260 XD®, by AJAN®) had the outside diameter of 32.8 mm. Nozzle 120 was made of Cu-OF CW008A / EN 13601 and its average lifespan was 15 % longer than that of commercially available nozzle 18, made of CuTeP CW118C.

Adapter 200 employed in this experiment was of type "b" according to FIG. 9b and 17. After nozzle 120 was worn out at point 111 of its most strained segment, it was necessary to replace the worn-out nozzle 120 with a brand new reduced scale nozzle. There was no wear on adapter 200. Adapter 200 continued to perform its function even after 20 pcs of nozzles 120 were consumed. Nozzle 120 withstood the concentrated load of 78.0 A per mm² of the cross-section of aperture 121. Upon comparing the manufacturing cost of 20 pcs of nozzles 18 for the load of 30 A against the manufacturing cost of 20 pcs of reduced scale nozzles 120 of type "g" for the load of 30 A plus 1 pc of type "b" adapter 200, it was established that for the solution according to the invention, the material consumption was reduced by 69.5 % and the manufacturing time was reduced by 44.0 %.

### Comparative Experiment 9

To test reduced scale nozzles 120 for the load of 130 A, we used type "h" reduced scale nozzle 120 according to FIG. 8h and 18. Nozzle 120 according to the invention had the largest outside diameter D2 of 22.8 mm, while commercially available nozzle 19 (HP 130-260 XD®, by AJAN®) had the outside diameter of 32.8 mm. Nozzle 120 was made of Cu-OF CW008A / EN 13601 and its average lifespan was the same as that of commercially available nozzle 19, made of CuTeP CW118C. After applying a nickel layer 0.008 to 0.012 mm thick using galvanic plating, the lifespan of nozzle 120 was extended by additional 26 %.

Adapter 200 employed in this experiment was of type "b" according to FIG. 9b and 18. After nozzle 120 was worn out at point 111 of its most strained segment, it was necessary to replace the worn-out nozzle 120 with a brand new reduced scale nozzle. There was no wear on adapter 200. Adapter 200 continued to perform its function even after 20 pcs of nozzles 120 were consumed. Nozzle 120 withstood the concentrated load of 84.5 A per mm² of the cross-section of aperture 121. Upon comparing the manufacturing cost of 20 pcs of nozzles 19 for the load of 130 A against the manufacturing cost of 20 pcs of reduced scale nozzles 120 of type "h" for the load of 130 A plus 1 pc of type "b" adapter 200, it was established that for the solution according to the invention, the material consumption was reduced by 69.5 % and the manufacturing time was reduced by 45.4 %.

### Reference Signs List

- 100: reduced scale nozzle cooled directly by liquid coolant
- 101: divergent aperture
- 102: aperture designed to lead away some of plasma gas
- 103: liquid-cooled surface
- 104: narrowest point of aperture
- 105: conically shaped spot
- 106: radius shaped spot
- 108: elliptically shaped spot
- 109: seal between reduced scale nozzle and adapter
- 110: mounting surface for attaching reduced scale nozzle to plasma torch
- 111: most strained segment of nozzle
- 120: reduced scale nozzle cooled by liquid coolant indirectly
- 121: cylindrical aperture
- 123: cooling surface seat
- X: convergent part of nozzle
- X: divergent part of nozzle
- L1: combined length of convergent and divergent parts
- L2: distance between cooled surface 103 and narrowest point 104, or beginning of aperture 121
- L3: distance between cooled surface 103 and end of aperture 101 or 121
- D1: smallest diameter of aperture 101 or 121
- D2: largest outside diameter of reduced scale nozzle
- D4: diameter at end of divergent aperture 101
- D22: largest outside diameter of reduced scale nozzle after adapter is attached
- 200: adapter
- 201: place where adapter 200 touches plasma torch 300
- 202: place where reduced scale nozzle 100 or 120 touches adapter
- 209: seal between adapter 200 and plasma torch 300 at location 201
- 300: plasma torch
- V: direction of plasma flow
- A°: angle of cone at location 105

## Claims

1. Reduced scale nozzle (100) for use at current loads of up to 130 A in liquid-cooled dual-gas plasma torch (300), in which nozzle (100) is cooled on its surface (103) directly by a liquid coolant, **characterized in that** it is provided with mounting surface (110) for insertion into adapter (200) and its largest outside diameter (D2) is less than 15.9 mm.

2. Reduced scale nozzle (100) for use at current loads of up to 130 A in a liquid-cooled dual-gas plasma torch (300), in which nozzle (100) is cooled on its surface (103) directly by a liquid coolant, **characterized in that** it is provided with mounting surface (110) for insertion into adapter (200) and its largest outside diameter (D2) is less than 18.5 mm.

3. Reduced scale nozzle (100) according to claim 1 or 2, **characterized in that** it consists of convergent area (X) and divergent area (Y), wherein divergent area (Y) contains aperture (121) for passage of the plasma flow, where aperture (121) is of a cylindrical shape.

4. Reduced scale nozzle (100) according to claim 1 or 2, **characterized in that** in its narrowest point (104), it is divided into convergent area (X) and divergent area (Y), wherein divergent area (Y) contains aperture (101) for passage of the plasma flow, where aperture (101) expands from point (104) at angle (A°) in direction (V) of the plasma flow, aperture (101) is of a conical shape at point (105), radius shape at point (106), and elliptical shape at point (108).

5. Reduced scale nozzle (100) according to claim 4, **characterized in that** the size of angle (A°) ranges from 0.5 to 3.0°, or preferably from 1.8 to 2.2°.

6. Reduced scale nozzle according to any of the claims above, **characterized in that** it is provided with seal (109), which prevents passage of a liquid and/or gas, at the place where nozzle (100) is attached to adapter (200).

7. Reduced scale nozzle (100) according to any of the claims above, **characterized in that** it contains apertures (102) for letting out some of the plasma gas from area (X).

8. Reduced scale nozzle according to any of the claims above, **characterized in that** it is made of a copper alloy, preferably of Cu-ETP CW004A or Cu-OF CW008A / EN 13601.

9. Reduced scale nozzle according to any of the claims above, **characterized in that** all of its surface is galvanically plated with a layer of chromium or nickel 0.008 to 0.012 mm thick.

10. Reduced scale nozzle (120) for use at current loads of up to 400 A for liquid-cooled dual-gas plasma torch (300), in which nozzle (120) is cooled by a liquid coolant indirectly, **characterized in that** it is provided with mounting surface (110) for insertion into adapter (200), cooling surface (123), it is provided with seal (109), which prevents passage of a liquid and/or gas, at the point where nozzle (120) is attached to adapter (200), and its largest outside diameter (D2) is less than 25.9 mm.

11. Reduced scale nozzle (120) according to claim 10, **characterized in that** it consists of convergent area (X) and divergent area (Y), wherein divergent area (Y) contains aperture (121) for passage of the plasma flow, where aperture (121) is of a cylindrical shape.

12. Reduced scale nozzle (120) according to claim 10, **characterized in that** in its narrowest point (104), it is divided into convergent area (X) and divergent area (Y), wherein divergent area (Y) contains aperture (121) for passage of the plasma flow, where aperture (121) expands from point (104) at angle (A°) in direction (V) of the plasma flow, aperture (121) is of a conical shape at point (105), radius shape at point (106), and elliptical shape at point (108).

13. Reduced scale nozzle (120) according to claim 12, **characterized in that** the size of angle (A°) ranges from 0.5 to 3.0°, or preferably from 1.8 to 2.2°.

14. Reduced scale nozzle (120) according to any of claims 10 to 13, **characterized in that** it is provided with seal (109), which prevents passage of liquid and/or gas at the place where nozzle (100) is attached to adapter (200).

15. Reduced scale nozzle (120) according to any of claims 10 to 14, **characterized in that** it contains apertures (102) for letting out some of the plasma gas from area (X).

16. Reduced scale nozzle (120) according to any of claims 10 to 15 above, **characterized in that** it is made of a copper alloy, preferably of Cu-ETP CW004A or Cu-OF CW008A / EN 13601.

17. Reduced scale nozzle (120) according to any of claims 10 to 16 above, **characterized in that** all of its surface is galvanically plated with a layer of chromium or nickel 0.008 to 0.012 mm thick.

18. Adapter (200) for attachment of nozzles (100, 120) to plasma torch (300), **characterized in that** on its side (202), it is provided with a mounting area for insertion of nozzle (100, 120) and on its side (201), it is provided with a shaping for insertion into body of torch (300), it is fitted with seal (209) at the point where adapter (200) is attached to torch (300) and the connection between adapter (200) and nozzle (100, 120) on its side (202) is sealed with seal (109) to prevent passage of a liquid and/or gas, wherein the connection between adapter (200) and nozzle (100, 120) is freely dismountable.

19. Adapter (200) according to claim 18, **characterized in that** it is made of brass, or preferably from alloy ENCW617N / CuZn40Pb2.

20. Adapter (200) according to claim 18 or 19, **characterized in that** seal (109) is its direct component.
